# EUROPÄISCHE PATENTSCHRIFT

(11) **EP 0 761 303 B1**
(45) Veröffentlichungstag und Bekanntmachung des Hinweises auf die Patenterteilung: **03.05.2000**
(21) Anmeldenummer: 96113374.1
(22) Anmeldetag: 21.08.1996
(51) Int. Cl.: B01J 19/32

(54) **Einbauelement für Stoff- oder Wärmeaustauschkolonnen**
Packing element for mass or heat exchange columns
Elément de garnissage pour colonnes d'échange de matière ou de chaleur

(30) Priorität: 10.10.1995 DE 19537690; 24.08.1995 DE 19531151
(43) Veröffentlichungstag der Anmeldung: 12.03.1997
(73) Patentinhaber: Raschig GmbH, 67061 Ludwigshafen (DE)
(72) Erfinder: Schultes, Michael, Dr. Ing., 67061 Ludwigshafen/Rhein (DE)
(74) Vertreter: Leitner, Waldemar, Dr. techn.

(56) Entgegenhaltungen:
- FR-A- 2 223 071
- GB-A- 1 314 179
- GB-A- 1 603 099
- US-A- 3 311 356
- US-A- 5 112 536
- US-A- 5 411 681

## Beschreibung

Die Erfindung betrifft Einbauelement, insbesondere für Stoff- und/oder Wärmeaustauschkolonnen oder -türme, die von einer Gas- und/oder Flüssigkeitsströmung durchsetzt werden, wobei das Einbauelement eine Mehrzahl von Austauschflächen aufweist, die im wesentlichen durch die Oberflächen von halbwellen- oder wellenförmigen Streifen ausgebildet sind, und wobei das Einbauelement mindestens eine erste Streifen-Gruppe, die mindestens einen halbwellen- oder wellenförmigen Streifen mit einer ersten Periodenlänge I₁ enthält, aufweist.

Derartige Einbauelemente sind bekannt und werden für systematisch aufgebaute Packungen in Stoff- und/oder Wärmeaustauschkolonnen, insbesondere im Gegenstromverfahren betriebene Stoff- und/oder Wärmeaustauschkolonnen für Destillations-, Rektifikations- oder Absorbtionstürme, verwendet. Hierbei bestehen die Einbauelemente aus in Strömungsrichtung aufrecht angeordneten Lamellen, die winkelig zur Strömungsrichtung liegende Wellungen oder Faltungen aufweisen, wobei im gepackten Zustand sich die Lamellen benachbarter Einbauelemente einander kreuzend berühren.

Aus der GB-A-1603099 ist ein Einbauelement mit einer Mehrzahl von Austauschflächen, die im wesentlichen durch die Oberflächen von wellenförmigen Streifen ausgebildet sind, bekannt. Hierbei ist vorgesehen, daß sämtliche Streifen des Einbauelements die gleiche Periodenlänge aufweisen und benachbarte Streifen entweder um eine viertel Wellenlänge versetzt oder gegenphasig angeordnet sind. Nachteilig daran ist, daß die auf den Austauschflächen befindliche Flüssigkeit nicht hinreichend von einem Streifen zu einem benachbarten Streifen übertreten kann, so daß keine optimale Verteilung der Flüssigkeitsströmung gegeben ist.

Aus der GB-A-1314179 ist ein Einbauelement bekannt, welches mehrere Austauschflächen aufweist, die im wesentlichen durch die Oberflächen von wellenförmigen Streifen ausgebildet sind. Diese welleförmigen Streifen sind in Streifen-Gruppen angeordnet, wobei sämtliche Streifen der einzelnen Streifen-Gruppe die gleiche Periodenlänge aufweisen und gegenphasig angeordnet sind. Nachteilig daran ist, daß die einzelnen Streifen-Gruppe durch Zwischenelemente getrennt sind, so daß ein Flüssigkeitsübergang zwischen den Streifen benachbarter Streifen-Gruppen nicht möglich ist.

Aus der US-PS 5,481 ist ein Füllkörper zur Herstellung einer nicht-orientierten Packung, also ein Füllkörper, der dazu dient, in eine Stoff- und/oder Wärmeaustauschkolle geschüttet zu werden, bekannt. Dieser Füllkörper weist Austauschfläche auf, die im wesentlichen durch die Oberflächen von wellenförmigen Streifen ausgebildet sind. Hierbei ist vorgesehen, daß zwei wellenförmigen Streifen von von einem Randsteg des Füllkörper ausgehenden, in axialer Richtung verlaufenden Zungen getrennt sind. Ein derartiger Füllkörper bewirkt den Nachteil, daß auch hierbei ein Flüssigkeitsübergang zwischen benachbarten wellenförmigen Streifen äußerst unzureichend gegeben ist.

Aus der EP 0 158 917 ist es bekannt, daß das Einbauelement schmale, jeweils auf den Flanken der Wellungen oder Faltung liegende Schlitze, die regelmäßig angeordnet sind, aufweist, während die Ränder der Wellen- oder Faltentäler und -berge ungeschlitzt ausgeführt sind. Dadurch soll eine gleichmäßige und damit optimale Verteilung der im Gegenstrom geführten Medien und damit ein optimierter Medienaustausch erreicht werden. Diese bekannten Einbauelemente zeichnen sich zwar durch eine überraschend hohe Wirksamkeit bei geringem Druckverlust aus, sie besitzen jedoch den Nachteil, daß die Herstellung des Einbauelements mit seinen regelmäßig angeordneten Schlitzen einen relativ hohen Aufwand mit sich bringt.

Aus der EP 0 130 745 ist es bekannt, ein Einbauelement aus Streckmaterial zu fertigen und nach dem Einbringen der Schlitze durch Ziehen zu strecken, wobei sich die Schlitze dann in nachteiliger Art und Weise ungleichförmig öffnen. Beim anschließenden Wellen oder Falten der Einbauelemente liegen die Schlitze dann teilweise auf den Wellen- bzw. Faltentälern oder -bergen, was zu einer weiteren unregelmäßigen Öffnung der Schlitze führt. Hierdurch ergibt sich in nachteiliger Art und Weise keine gleichmäßige Verteilung der Gas- und/oder Flüssigkeitsströme. Vielmehr herrscht eine willkürliche Verteilung mit lokal unterschiedlichen Druckverlusten vor. Außerdem tritt eine sich laufend ändernde Geometrie der die Austauschflächen ausbildenden Oberflächen der Einbauelemente auf.

Es ist nun Aufgabe der Erfindung, ein Einbauelement der eingangs genannten Art derart weiterzubilden, daß eine optimale Verteilung der Gas- und/oder Flüssigkeitsströmung bei einer wenig aufwendigen Fertigung erzielt wird.

Diese Aufgabe wird erfindungsgemäß dadurch gelöst, daß das Einbauelement mindestens eine sich daran unmittelbar anschließende zweite Streifen-Gruppe, die mindestens einen halbwellen- oder wellenförmigen Streifen mit einer zweiten Periodenlänge I₂ enthält, aufweist, daß die Periodenlänge I₁ der Streifen der ersten Streifen-Gruppe und die Periodenlänge I₂ der zweiten Streifen-Gruppe unterschiedlich sind, daß sich die wellen- oder halbwellenförmigen Streifen entlang einer gedachten Axialebene des Einbauelements erstrecken, und daß die Periodenlänge I₁ eines an die zweite Streifen-Gruppe angrenzenden Streifens der ersten Streifen-Gruppe und die Periodenlänge I₂ eines an diese angrenzenden Streifens der zweiten Streifen-Gruppe derart aufeinander abgestimmt sind, daß die beiden aneinander angrenzenden Streifen sich an mindestens einer Stelle derart berühren, so daß ein Flüssigkeitsübergang zwischen diesen beiden Streifen erfolgbar ist.

Durch die erfindungsgemäßen Maßnahmen wird in besonders vorteilhafter Art und Weise ein Einbauelement geschaffen, das sich dadurch auszeichnet, daß eine in hohem Maße gleichmäßige Verteilung der Flüssigkeit über die einzelnen Streifen, also über die Austauschflächen des Einbauelements für systematisch aufgebaute Packungen, gegeben ist: Zum einen bewirkt die halbwellen- oder wellenförmige Struktur der im wesentlichen das Einbauelement ausbildenden Streifen, daß Flüssigkeitstropfen sich leicht über diese Streifen verteilen können. Die bereits vorstehend angesprochene halbwellen- oder wellenförmige Ausbildung der einzelnen Streifen des erfindungsgemäßen Einbauelements für systematisch aufgebaute Packungen besitzt desweiteren den Vorteil, daß hierdurch eine besonders offene Struktur einer aus den erfindungsgemäßen Elnbauelementen aufgebauten Packung ausgebildet wird, die in einem geringen Druckabfall in der Kolonne oder in dem Turm resultiert. Indem erfindungsgemäß vorgesehen ist, daß die Periodenlänge I₁ eines an die zweite Streifen-Gruppe angrenzenden Streifens der ersten Streifen-Gruppe und die Periodenlänge I₂ eines an diese Streifen-Gruppe angrenzenden Streifens der zweiten Streifen-Gruppe derart aufeinander abgestimmt sind, daß die beiden aneinander angrenzenden Streifen sich an mindestens einer Stelle derart berühren, so daß ein Flüssigkeitsübergang zwischen diesen beiden Streifen erfolgbar ist, besitzt diese Maßnahme den Vorteil, daß hierdurch ein Übertritt von Flüssigkeit von einem zum benachbarten Streifen besonders einfach möglich ist.

Eine weitere vorteilhafte Weiterbildung der Erfindung sieht vor, daß mindestens eine der Streifen-Gruppen des erfindungsgemäßen Einbauelements mindestens zwei Streifen aufweist, und daß sich die Streifen dieser Streifen-Gruppe mindestens an einer Stelle berühren. Die erfindungsgemäße Maßnahme besitzt den Vorteil, daß hierdurch in besonders einfacher Art und Weise eine Verteilung der das erfindungsgemäße Einbauelement beaufschlagenden Flüssigkeit über die dieser Streifen-Gruppe zugehörigen Streifen erfolgen kann.

Eine weitere vorteilhafte Weiterbildung der Erfindung sieht vor, daß im wesentlichen alle wellenförmigen Streifen einer Streifen-Gruppe im wesentlichen die gleiche Periodenlänge aufweisen, und daß vorzugsweise benachbarte Streifen gegenphasig angeordnet sind. Durch diese erfindungsgemäße Maßnahme wird dann eine besonders offene Struktur der aus den erfindungsgemäßen Einbauelementen aufgebauten erfindungsgemäßen Packung erzielt, und zwar insbesondere dann, wenn benachbarte Streifen gegenphasig angeordnet sind, so daß sich dieses Einbauelement für Packung für Kolonnen oder Türme durch seinen besonders geringen Strömungswiderstand auszeichnet.

Eine weitere vorteilhafte Weiterbildung der Erfindung sieht vor, daß die Periodenlänge mindestens eines der Streifen der zweiten Streifen-Gruppe kleiner als die Periodenlänge der Streifen der ersten Streifen-Gruppe ist. Eine derartige Maßnahme besitzt den Vorteil, daß in vorteilhafter Art und Weise zwischen den Randstreifen der ersten und der zweiten Streifen-Gruppe mehrere Berührungsstellen ausgebildet werden, so daß die auf den Austauschflächen eines jeden einzelnen Streifens befindliche Flüssigkeit leichter von der ersten zur zweiten Streifen-Gruppe übertreten kann.

Eine weitere vorteilhafte Weiterbildung der Erfindung sieht vor, daß die Periodenlänge l₁ der Streifen der ersten Streifen-Gruppe ein Vielfaches, insbesondere ein geradzahliges Vielfaches, der Periodenlänge l₂ der Streifen der zweiten Streifen-Gruppe ist. Durch diese erfindungsgemäße Maßnahme wird in vorteilhafter Weise erreicht, daß regelmäßig beabstandete Verbindungen ausgebildet werden, die sich quer über ein durch diese Streifen ausgebildetes Segment des Einbauelements erstrecken, so daß eine besonders gute Verteilung der Flüssigkeit über sämtliche Streifen dieses Segments des erfindungsgemäßen Einbauelements für systematisch aufgebaute Packungen gewährleistet ist.

Weitere vorteilhafte Weiterbildungen der Erfindung sind Gegenstand der Unteransprüche.

Weitere Einzelheiten und Vorteile der Erfindung sind dem Ausführungsbeispiel zu entnehmen, das im folgenden anhand der Figuren beschrieben wird. Es zeigen:
- Figur 1: eine Draufsicht auf ein Ausführungsbeispiel eines Einbauelements,
- Figur 2: eine Ansicht des Ausführungsbeispiels der Figur 1 aus der Richtung II,
- Figur 3: eine Ansicht des Ausführungsbeispiels der Figur 1 aus der Richtung III,
und
- Figur 4: eine auszugsweise, perspektivische Ansicht des Ausführungsbeispiels

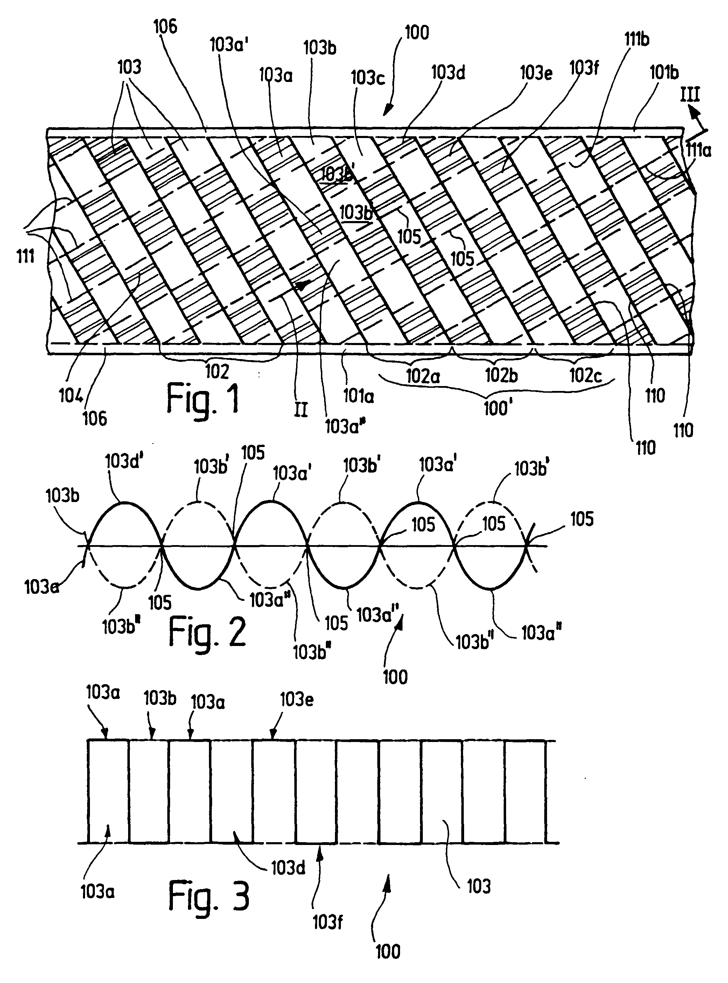

Das in den Figuren 1 bis 4 dargestellte Ausführungsbeispiel eines allgemein mit 100 bezeichneten Einbauelements für systematisch aufgebaute Packungen weist vorzugsweise eine im wesentlichen rechteckige Kontur auf, die durch zwei Längsränder 101 a und 101b sowie zwei Querränder (nicht gezeigt) begrenzt ist.

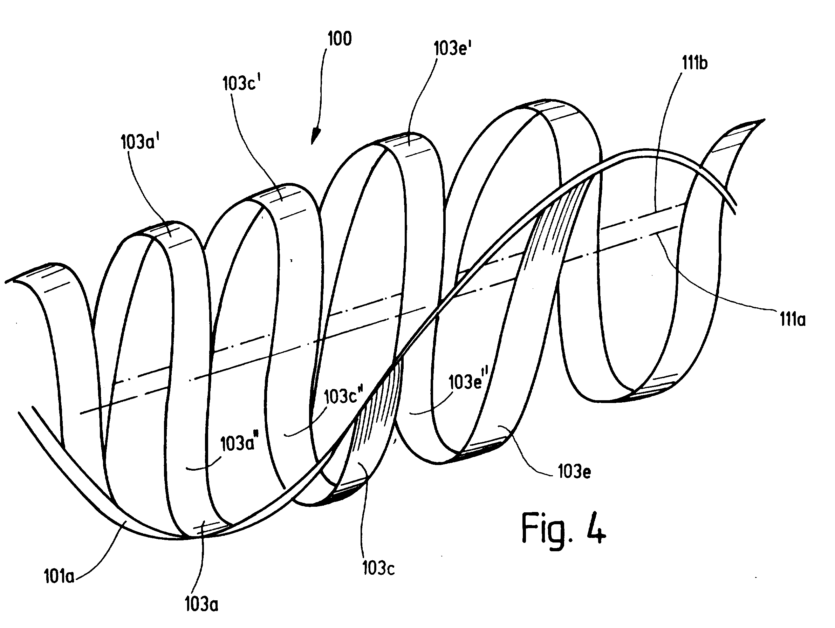

Wie am besten aus Figur 4 ersichtlich ist, sind die Längsränder 101a, 101b des Einbauelements 100 wellenförmig gestaltet, so daß das Einbauelement 100 als Ganzes eine wellenförmige Gestalt aufweist.

Das Einbauelement 100 weist eine Vielzahl von jeweils mehrere Streifen 103 aufweisende Streifen-Gruppen 102 auf, die gegenüber den als Stege ausgebildeten Längsrändern 101 a, 101b geneigt angeordnet sind. Diese geneigte Anordnung ist insbesondere aus Figur 1 ersichtlich, in der die bevorzugte Konstellation dargestellt ist, bei der die Streifen-Gruppen 102 und somit die Streifen 103 der Streifen-Gruppen 102 unter ca. 45° zu den Längsrändern 101 a, 101b des Einbauelements 100 geneigt verlaufen. Es muß aber an dieser Stelle erwähnt werden, daß die Anordnung der Streifen-Gruppen 102 unter einem Winkel von 45° zwar aufgrund der hierdurch erzielbaren Vorteile beim Zusammenbau mehrerer Einbauelemente 100 zu einer systematisch aufgebauten Packung bevorzugt ist, daß es jedoch durchaus auch möglich ist, die Streifen-Gruppen 102 und/oder einzelne Streifen 103 unter einem anderen Winkel als 45 ° zu den Längsrändem 101a, 101b anzuordnen. Ebenso ist es denkbar, daß bei bestimmten Einsatzzwecken die Streifen-Gruppen 102 und/oder die Streifen 103 dieser Streifen-Gruppen 102 orthogonal oder parallel zu den Längsrändern 101a, 101b verlaufen.

Nachfolgend soll die Struktur des beschriebenen Einbauelements 100 anhand dreier ein Segment 100' des Einbauelements 100 ausbildenen Streifen-Gruppen 102a, 102b, 102c aus der Menge der Streifen-Gruppen 102 des Einbauelements 100 beschrieben werden, da sich die Ausbildung der weiteren Segmente des Einbauelements 100 sowie deren Streifen-Gruppen 102 sich ohne weiteres für den Fachmann aus dem Aufbau der die Streifen 103a-103f aufweisenden Streifen-Gruppen 102a, 102b und 102c ergibt.

Diese dreigruppige Ausführung des Segments 100' des Einbauelements 100 ist aber nicht die einzig denkbare. Vielmehr ist es möglich, in Abhängigkeit von der Breite b des Einbauelements 100 sowie der Breite B der einzelnen Streifen 103a-103f weniger oder mehr als drei derartige Streifen-Gruppen 102a-102c mit jeweils mindestens einem Streifen 103a-103f vorzusehen. Im Minimalfall besteht das Einbauelement 100 aus nur zwei Streifen-Gruppen - z. B. den Streifen-Gruppen 102a und 102b mit jeweils nur einem einzigen Streifen- z.B. dem Streifen 103a und 103c.

Wichtig dabei ist, daß die durch Wellenteilungslinien ausbildende Schlitze 110 voneinander getrennten Streifen 103, 103a-103f des Einbauelements 100 eine halbwellen- oder wellenförmige Ausbildung aufweisen. Dies besitzt den Vorteil, daß hierdurch eine besonders offene Struktur der Packung ausgebildet wird, die in einem geringen Druckabfall in einer die beschriebenen Einbauelemente 100 verwendenen Kolonnen oder in einem Turm resultiert. Die Austauschflächen 104 des Einbauelements 100 werden hierbei im wesentlichen durch die Oberfläche der halbwellen- oder wellenförmigen Streifen 103a-103f ausgebildet. In Figur 1 ist nun die vorstehend genannte halbwellen- oder wellenförmige Ausbildung der Streifen 103a-103f der Streifen-Gruppen 102a-102c dadurch dargestellt, daß Wellenberge ausbildende obere Halbwellen 103a'-103f' mit einer deren Biegung andeutenden Schraffur gekennzeichnet sind, während Wellentäler ausbildende untere Halbwellen 103a"-103f" als weiße Flächen ausgeführt sind. Die Abgrenzung zwischen den oberen und unteren Halbwellen 103a'-103f' und 103a"-103f" wird in Figur 1 durch die strichliert gezeichneten Wendepunktslinien 111 und 111 a, 111 b repräsentiert.

Desweiteren ist vorgesehen, daß eine Periodenlänge I₁ der die erste Streifen-Gruppe 102a ausbildenden Streifen 103a, 103b und die Periodenlänge I₂ bzw. I₃ der Streifen 103c, 103d bzw. 103e, 103f der zweiten bzw. der dritten Streifen-Gruppe 102b bzw. 102c derart gewählt ist, daß die Periodenlänge l₁ des an die zweite Streifen-Gruppe 102b angrenzenden Streifens 103b der ersten Streifen-Gruppe 102a des Segments 100' des Einbauelements 100 und die Periodenlänge l₂ des an diese Streifen-Grupe 102a angrenzenden Streifens 103c der zweiten Streifen-Gruppe 102b derart aufeinander abgestimmt sind, daß die beiden aneinander angrenzenden Streifen 102b, 102c sich an mindestens einer Stelle derart berühren, so daß ein Flüssigkeitsübergang zwischen diesen beiden Streifen 103b, 103c erfolgbar ist. In entsprechender Art und Weise sind die Periodenlänge l₃ des an die zweite Streifen-Gruppe 102b angrenzenden Streifens 103e der dritten Streifen-Gruppe 102c auf die Periodenlänge l₂ des an die dritte Streifen-Gruppe 102c angrenzenden Streifens 103d der zweiten Streifen-Gruppe 102b derart aufeinander abgestimmt, daß die beiden aneinander angrenzenden Streifen 103d, 103e sich ebenfalls an mindestens einer Stelle derart berühren, daß auch ein Flüssigkeitsübergang zwischen diesen beiden Streifen 103d, 103e erfolgbar ist.

In dem hier gezeigten Beispiel ist die Periodenlänge l₁ der die erste Streifen-Gruppe 102a ausbildenden Streifen 103a, 103b gleich der Periodenlänge l₂ der die zweite Streifen-Gruppe 102b ausbildenden Streifen 103c und 103d. In entsprechender Art und Weise ist die Periodenlänge l₃ der die dritte Streifen-Gruppe 102c ausbildenden Streifen 103e, 103f gleich der Periodenlänge l₂ der Streifen 103c, 103d der zweiten Streifen-Gruppe 102b, und somit gleich der Periodenlänge I₁ der Streifen 103a, 103b der ersten Streifen-Gruppe 102a. Es ist aber auch möglich, daß beispielhafterweise die Periodenlänge l₂ der Streifen 103c, 103d der zweiten Streifen-Gruppe 102b die Hälfte der Periodenlänge l₁ der Streifen 103a, 103b bzw. 103e-103f der ersten bzw. der dritten Streifen-Gruppe 102a bzw. 102c beträgt. In Verallgemeinerung dieses Ausführungsbeispiels ist anzuführen, daß die Periodenlänge l₂ der an die erste Streifen-Gruppe 102a anschließenden Streifen 103c, 103d der zweiten Streifen-Gruppe 102b mit deren Periodenlänge I₁ bevorzugt wie I₂ = I₁/n mit n= 1,2... in Beziehung steht, d. h. daß die Periodenlänge I₁ ein Vielfaches der Periodenlänge l₂ beträgt.

Hierbei wird bevorzugt, daß die Periodenlänge l₁ ein geradzahliges Vielfaches der Periodenlänge l₂ beträgt. Durch dieses bevorzugte Verhältnis der Periodenlängen l₁ und l₂ wird in vorteilhafter Weise erreicht, daß sämtliche Streifen 103a-103f in regelmäßigen Abständen ein gemeinsames Amplitudenminimum aufweisen, so daß sämtliche Streifen 103a-103f der Streifen-Gruppen 102a-102c eine durchgehende Verbindung 105 ausbilden, die innerhalb des beschriebenen Segments 100' des Einbauelements 100 von dem in den Figuren 1 und 4 unteren Längsrand 101a bis zu dem nur in der Figur 1 dargestellten oberen Längsrand 101b reichen. Hierdurch wird in vorteilhafter Art und Weise erreicht, daß die auf den Austauschflächen 104 befindliche Flüssigkeit sich über die Verbindungen 105 über das gesamte Segment 100' des Einbauelements 100 und über die weiteren Segmente des Einbauelements und so sich im wesentlichen über das gesamte Einbauelement 100 verteilen kann.

Um diesen Effekt noch zu verstärken, kann vorgesehen sein, daß - in den Figuren nicht dargestellt - die Verbindungen 105 des Einbauelements 100 verbreitert ausgebildet sind, indem die Streifen 103a-103f in diesem Bereich je ein nicht näher dargestelltes Stegelement aufweisen, welche die durchgehenden Verbindungen 105 verbreitern.

Die vorstehend beschriebene Ausgestaltung des Einbauelements 100 mit durchgehenden Verbindungen 105 ist bevorzugt, jedoch nicht zwingend erforderlich. Vielmehr ist es zur Erzielung eines Flüssigkeitsübergangs ausreichend, wenn sich benachbarte Streifen 103a-103f paarweise an mindestens einer Stelle derart berühren, daß - z.B. durch eine Kapillarwirkung - eine Flüssigkeitsübergang zwischen den Streifen 103a - 103f erfolgen kann.

Im Hinblick auf die Gasdurchlässigkeit des Einbauelements 100 für systematisch aufgebaute Packungen ist es von Vorteil, wenn benachbarte Streifen 103a und 103b, 103b und 103c, 103c und 103d etc. gegenphasig angeordnet sind. Diese Anordnung ist am besten aus Figur 2 ersichtlich, welche zeigt, daß bei dem beschriebenen Ausführungsbeispiel die oberen Halbwellen 103a' des ersten wellenförmigen Streifens 103a alternierend zu den oberen Halbwellen 103b' des zweiten wellenförmigen Streifens 103b angeordnet sind. In entsprechender Art und Weise sind die unteren Halbwellen 103a" des wellenförmigen Streifens 103a alternierend zu den oberen Halbwellen 103b" des zweiten wellenförmigen Streifens 103b angeordnet.

Es ist natürlich auch denkbar, daß diese gegenphasige Anordnung nur für eine definierte Anzahl der oberen oder unteren Halbwellen vorgesehen ist. Dem Fachmann ist ersichtlich, daß in Abstimmung auf den jeweils ins Auge gefaßten Einsatzzweck des Einbauelements 100 für systematisch aufgebaute Packungen eine Vielzahl von Anordnungsmöglichkeiten der Halbwellen 103a', 103a", 103b', 103b" der wellenförmigen Streifen 103a, 103b der ersten Streifen-Gruppe 102a möglich ist.

Die relative räumliche Anordnung der Halbwellen 103c', 103c" und 103d', 103d" der beiden wellenförmigen Streifen 103c und 103d der zweiten Streifen-Gruppe 102b sowie der Halbwellen 103e', 103e", 103f', 103f", der Streifen 103e, 103f der dritten Streifen-Gruppe 102c des Einbauelements 100 wird vorzugsweise wie diejenige der Streifen 103a, 103b der ersten Streifen-Gruppe 102a ausgeführt. Hierbei wird jedoch bevorzugt, daß die Orientierung der an die jeweils vorangehende Streifen-Gruppe 102a bzw. 102b angrenzenden Streifen 103c bzw. 103e derart gewählt ist, daß die Halbwellen alternierend orientiert, also gegenphasig, zu denjenigen der entsprechenden Streifen 103b bzw. 103d der vorangehenden Streifen-Gruppe 102a bzw. 102b ist.

Selbstverständlich ist es aber auch möglich, daß mindestens ein Segment 100' des Einbauelements 100 oder das Einbauelement 100 als Ganzes im wesentlichen nur aus Streifen 103, 103a-103f besteht, welche jeweils nur obere oder untere Halbwellen 103a'-103f', 103a"-103f" aufweisen. Ebenfalls ist es möglich, daß ein oder mehrere Streifen 103, 103a-103f des Einbauelements 100 derartig ausgebildet sind, daß zwischen zwei benachbarten Halbwellen 103a'-103f oder 103a"-103f" ein oder mehrere flach ausgebildete Streifenelemente angeordnet sind. Derartige Ausbildungen der Streifen 103, 103a-103f besitzen den Vorteil, daß ein derartig ausgeführtes Einbauelement 100 besonders einfach herstellbar ist

Die einzelnen Streifen 103a-103f sind - wie am besten aus Figur 2 ersichtlich ist - im wesentlichen sinusförmig ausgebildet. Dies hat den Vorteil, daß sich auf den Austauschflächen 104 der Streifen 103a-103f befindliche Flüssigkeitstropfen entlang dieser bewegen können, ohne sofort abzutropfen. Es ist aber auch möglich, anstelle der sinusförmigen Gestaltung der halbwellen- oder wellenförmigen Streifen 103a-103f auch andere Formen, wie z.B. eine Dreiecksform, eine Sägenzahnform oder eine Stufenform der Halbwellen-103a'-103f" vorzusehen.

In der eine Ansicht aus der Richtung III des Einbauelements 100 zeigenden Figur 3 wird nun die Abfolge der einzelnen Streifen 103a-103f der Streifen-Gruppen 102a-102c ersichtlich. Diese Figur bedarf - wenn man die vorstehende Beschreibung berücksichtigt - an und für sich keiner weiteren Erläuterung.

In Figur 4 ist nun der Verlauf einiger der im Bereich der Wendepunktslinien 111a, 111b der Figur 1 liegenden Halbwellen 103a'-103f" der Streifen 103a-103f der Streifen-Gruppen 102a-102c des Einbauelements 100 dargestellt. Man erkennt aus dieser Figur, daß sich die von dem als Steg 105 ausgeführten Rand 101a des Einbauelements ausgehend die unteren Halbwellen 103a", 103c" und 103e" zunächst nach unten erstrecken, um ein Wellental der Streifen 103a, 103c und 103e auszubilden. An die vorgenannten unteren Halbwellen 103a", 103c" und 103e" der Streifen 103a, 103c und 103e gehen diese dann in die oberen Halbwellen 103a', 103c' und 103e' über, um danach im Bereich der zweiten Wendepunktslinie 101b in die weitere untere Halbwelle 103a", 103c" und 103e" überzugehen, welche in der Figur 4 nicht mehr gezeigt sind.

Wie aus der obigen Beschreibung unmittelbar ersichtlich ist, ist in der Figur 4 jeder zweite der Streifen 103a-103f der Streifen-Gruppen 102-102c dargestellt. Dies geschieht deshalb, um zu einer übersichtlicheren Darstellung des räumlichen Verlaufs der gezeigten Streifen 103, 103c, 103e zu gelangen. Dem Fachmann ist aus der obigen Beschreibung sowie aus den Zeichnungen 1 bis 4 klar ersichtlich, daß die zwischen den Streifen 103a, 103c und 103e liegenden Streifen 103b, 103d und 103f der Streifen-Gruppen 102a-102c - wie in Figur 1 dargestellt - gegenphasig verlaufen oder - wie beschrieben - gleichphasig zu den Streifen 103a, 103c und 103e angeordnet sind.

Das beschriebene Einbauelement 100 besitzt darüber hinaus den Vorteil, daß es in besonders einfacher Art und Weise aus einem Metallblech herstellbar ist, indem in einem ersten Arbeitsschritt in den Metallstreifen Schnitte eingebracht werden, welche die einzelnen Streifen 103, 103a-103f des Einbauelements 100 voneinander abtrennen, wobei die einzelnen Streifen 103a-103f des Einbauelements 100 durch die Längsränder 101 a, 101b zusammengehalten werden. In einem zweiten Arbeitsschritt wird dann durch eine Verformung der nun getrennten Metallstreifen 103, 103a-103f des Metallblechs die Wellenstruktur der Streifen 103, 103a-103f hergestellt und die Streifen 103, 103a-103f werden ggf. an ihren Berührungsstellen mechanisch verbunden.

Anschließend werden die Längsränder 101a, 101b wellenförmig gebogen, um dem Einbauelement 100 seine eingangs beschriebene wellenförmige Struktur zu verleihen.

Optional kann noch vorgesehen sein, daß zumindest ein Teil der Streifen 103, 103a-103f des Einbauelements 100 mechanisch von den als Stegen 106 ausgebildeten Längsrändern 101a, 101b des Einbauelements 100 getrennt sind.

Die durch diese mechanische Trennung der Streifen 103, 103a-103f des Einbauelements 100 bewirkten freien Enden dieser Streifen 103, 103a-103f besitzen den Vorteil, daß das Einbauelement 100 ein geschlossenes Randelement 106 aufweist und - was insbesondere für den Einbau und die Montage des Einbauelements 100 wichtig ist - daß keiner der Streifen 103, 103a-103f über das Randelement 106 vor- oder übersteht.

Um dem Einbauelement 100 eine hinreichende mechanische Stabilität zu verleiten, und um einen besseren Übertritt der Flüssigkeiten zwischen zwei benachbarten Streifen zu ermöglichen, ist vorzugsweise vorgesehen, daß die einzelnen Streifen 103a-103f der Streifen-Gruppen 102a-102c des Einbauelements 100 an ihren Berührungsstellen mechanisch verbunden sind. Es muß aber betont werden, daß diese mechanische Verbindung für einen Flüssigkeitsübertritt zwischen zwei benachbarten Streifen 103a-103f nicht zwingend erforderlich ist, da es - wie bereits erwähnt - auch durchaus möglich ist, zwei benachbarte Streifen 103a-103f derartig beabstandet anzuordnen, daß ein Flüssigkeitsübertritt durch einen Kapillareffekt bewirkbar ist.

Um die mechanische Stabilität des beschriebenen Einbauelements nochmals zu erhöhen, kann vorzugsweise noch vorgesehen sein, daß in mindestens einem der Streifen 103a-103f jeweils mindestens eine Sicke (nicht gezeigt) vorgesehen ist

Es ist aber auch möglich, daß das Einbauelement 100 für eine systematisch aufgebaute Packung nicht aus Metall, sondern aus Keramik oder Kunststoff hergestellt ist, wobei im letztgenannten Fall die Herstellung in vorteilhafter Art und Weise durch ein Spritzgießen erfolgen kann.

Abschließend zum Einbauelement 100 ist noch zu erwähnen, daß durch ein entsprechendes Aneinanderreihen einer Vielzahl von Einbauelementen 100 sowie deren mechanische Verbindung in vorteilhafter Art und Weise eine systematisch aufgebaute Packung für Kolonnen oder Türme ausgebildet wird, die sich durch ihren geringen Druckabfall für das diese Kolonnen oder Türme durchströmende Gas sowie eine weitgehend gleichmäßige Verteilung der in die Kolonne oder Türme eingeleiteten Flüssigkeit über die einzelnen Einbauelemente 100 auszeichnet. Außerdem ist das Einbauelement 100 in besonders vorteilhafter Art und Weise einfach und daher kostengünstig herstellbar.

Außerdem soll noch angeführt werden, daß unter der Vielzahl der möglichen Ausbildungen des Einbauelements 100 die in den Figuren dargestellte, bei der die Streifen 103a-103f der Streifen-Gruppen 102a-102c jeweils die gleiche Periodenlänge aufweisen, bevorzugt wird, da aufgrund der hierdurch erzielbaren regelmäßigen Struktur des beschriebenen Einbauelements 100 ein besonders geringer Verlustwiderstand für das die Kolonne oder den Turm durchströmende Gas erzielt wird.

Insbesondere in diesem Fall ist es dann von Vorteil, wenn der vorzugsweise zu erzielende Flüssigkeitsempfang zwischen benachbarten Streifen 103, 103a-103f des Einbauelements 100, der - wie bereits mehrfach erwähnt wurde - dadurch bewirkt wird, daß aneinander angrenzende Streifen sich an mindestens einer Stelle entsprechend berühren, dadurch erzielt wird, daß die Form der halbwellen- oder wellenförmigen Streifen 103, 103a-103f oder deren Amplitude entsprechend gewählt wird. Verallgemeinert ist also festzustellen, daß bei dem beschriebenen Einbauelement 100 für systematisch aufgebaute Packungen die Halbwellen- oder Wellenform der Streifen 103, 103a-103f hinsichtlich ihrer Periodenlänge und/oder ihrer Gestalt derart angepaßt werden, daß eine optimale Verteilung der Gas- und/oder Flüssigkeitsströmung innerhalb der Packung erzielt wird.

## Patentansprüche

1. Einbauelement, insbesondere für Stoff- und/oder Wärmeaustauschkolonnen oder -türme, die von einer Gas- und/oder Flüssigkeitsströmung durchsetzt werden, wobei das Einbauelement (100) eine Mehrzahl von Austauschflächen (104) aufweist, die im wesentlichen durch die Oberflächen von halbwellen- oder wellenförmigen Streifen (103, 103a-103f) ausgebildet sind, und wobei das Einbauelement (100) mindestens eine erste Streifen-Gruppe (102a), die mindestens einen halbwellen- oder wellenförmigen Streifen (103a, 103b) mit einer ersten Periodenlänge I₁ enthält, aufweist, dadurch gekennzeichnet, daß das Einbauelement (100) mindestens eine sich daran unmittelbar anschließende zweite Streifen-Gruppe (102b), die mindestens einen halbwellen- oder wellenförmigen Streifen (103c, 103d) mit einer zweiten Periodenlänge I₂ enthält, aufweist, daß die Periodenlänge I₁ der Streifen (103c, 103d) der ersten Streifen-Gruppe (102a) und die Periodenlänge I₂ der zweiten Streifen-Gruppe (102b) unterschiedlich sind, daß sich die wellen- oder halbwellenförmigen Streifen (103a-103d) entlang einer gedachten Axialebene des Einbauelements (100) erstrecken, und daß die Periodenlänge I₁ eines an die zweite Streifen-Gruppe (102b) angrenzenden Streifens (103b) der ersten Streifen-Gruppe (102a) und die Periodenlänge I₂ eines an diese (102a) angrenzenden Streifens (103c) der zweiten Streifen-Gruppe (102b) derart aufeinander abgestimmt sind, daß die beiden aneinander angrenzenden Streifen (103b, 103c) sich an mindestens einer Stelle derart berühren, so daß ein Flüssigkeitsübergang zwischen diesen beiden Streifen (103b, 103c) erfolgbar ist.

2. Einbauelement nach Anspruch 1, dadurch gekennzeichnet, daß das Einbauelement (100) mindestens eine dritte Streifen-Gruppe (102c), die mindestens einen halbwellen- oder wellenförmigen Streifen (103e, 103f) mit einer dritten Periodenlänge I₃ aufweist, daß die Periodenlänge I₃ eines an die zweite Streifen-Gruppe (102b) angrenzenden Streifens (103e) der dritten Streifen-Gruppe (102c) und die Periodenlänge I₂ eines an diese (102c) angrenzenden Streifens (103d) der zweiten Streifen-Gruppe (102b) derart aufeinander abgestimmt sind, daß die beiden aneinander angrenzenden Streifen (103d, 103e) sich an mindestens einer Stelle berühren.

3. Einbauelement nach Anspruch 1 oder 2, dadurch gekennzeichnet, daß in mindestens einer Streifen-Gruppe (102a, 102b, 102c) des Einbauelements (100) alle Streifen (103a. 103b; 103c, 103d; 103e, 103f) im wesentlichen die gleiche Periodenlänge aufweisen.

4. Einbauelement nach einem der Ansprüche 1-3, dadurch gekennzeichnet, daß die Periodenlänge I₁ mindestens eines Streifens (103a, 103b) der ersten Streifen-Gruppe (102a) im wesentlichen gleich der Periodenlänge I₂ eines Streifens (103c, 103d) der zweiten Streifen-Gruppe (102b) ist.

5. Einbauelement nach einem der vorangehenden Ansprüche, dadurch gekennzeichnet, daß die Periodenlänge I₂ der Streifen (103c, 103d) der zweiten Streifen-Gruppe (102b) kleiner als die Periodenlänge I₁ der Streifen (103a, 103b) der ersten Streifen-Gruppe (102a) oder gleich dieser Periodenlänge I₁ ist.

6. Einbauelement nach Anspruch 5, dadurch gekennzeichnet, daß die Periodenlänge l₁ der Streifen (103a, 103b) der ersten Streifen-Gruppe (102a) im wesentlichen ein Vielfaches, insbesondere ein geradzahliges Vielfaches, der Periodenlänge l₂ der Streifen (103c, 103d) der zweiten Streifen-Gruppe (102b) ist.

7. Einbauelement nach einem der vorangehenden Ansprüche, dadurch gekennzeichnet, daß zwei benachbarte Streifen (103a-103f) des Einbauelements (100) an ihrer Berührungsstelle mechanisch verbunden sind.

8. Einbauelement nach Anspruch 7, dadurch gekennzeichnet, daß mindestens zwei benachbarte Streifen (103a-103f) der Streifen-Gruppen (102; 102a-102c) des Einbauelements (100) mindestens eine durchgehende Verbindung (105) für die zu verteilende Flüssigkeit ausbilden.

9. Einbauelement nach Anspruch 8, dadurch gekennzeichnet, daß mindestens eine der durchgehenden Verbindungen (105) mittels eines Stegelements verbreitert ist.

10. Einbauelement nach Anspruch 9, dadurch gekennzeichnet, daß mindestens eine der durchgehenden Verbindungen (105) sich von einer ersten Außenseite (101a) zu einer dieser (101a) gegenüberliegenden zweiten Außenseite (101b) des Einbauelements (100) erstreckt.

11. Einbauelement nach einem der vorangehenden Ansprüche, dadurch gekennzeichnet, daß mindestens eine Außenseite (101a, 101b) des Einbauelements (100) als ein mindestens einen Teil der Streifen (103a, 103b; 103c, 103d; 103e, 103f) einer Streifen-Gruppe (102a; 102b; 102c) verbindendes Randelement (106) ausgebildet ist.

12. Einbauelement nach einem der vorangehenden Ansprüche, dadurch gekennzeichnet, daß mindestens zwei Halbwellen (103a', 103a", 103b', 103b") zweier Streifen (103a, 103b; 103c, 103d; 103e, 103f) mindestens einer Streifen-Gruppe (102a; 102b; 102c) des Einbauelements (100) zueinander gegenphasig angeordnet sind.

13. Einbauelement nach einem der vorangehenden Ansprüche, dadurch gekennzeichnet, daß zumindest zwei nebeneinander angeordnete Streifen (103b, 103c; 103d, 103e) zweier benachbarter Streifen-Gruppen (102a, 102b;102b, 102c) gegenphasig angeordnet sind.

14. Einbauelement nach einem der Ansprüche 12 oder 13, dadurch gekennzeichnet, daß zumindest eine Halbwelle (103a'-103f'; 103a"-103f") eines Streifens (103a-103f) gegenphasig zu einer Halbwelle (103a"-103f"; 103a'-103f') des zu diesem benachbarten Streifens (103a-103f) angeordnet ist.

15. Einbauelement nach einem der Ansprüche 12-14, dadurch gekennzeichnet, daß eine obere bzw. untere Halbwelle (103a'-103f' bzw. 103a"-103f") eines Streifens (103a-103f) gegenphasig zur unteren bzw. oberen Halbwelle (103a"-103f" bzw. 103a'-103f) des angrenzenden Streifens (103a-103f) angeordnet ist.

16. Einbauelement nach einem der vorangehenden Ansprüche, dadurch gekennzeichnet, daß mindestens eine Streifen-Gruppe (102; 102a-102c) des Einbauelements (100) geneigt zu einer der Außenseiten (101a, 101b) des Einbauelements (100) angeordnet ist.

17. Einbauelement nach Anspruch 16, dadurch gekennzeichnet, daß diese Neigung in etwa 45° beträgt.

18. Einbauelement nach einem der vorangehenden Ansprüche, dadurch gekennzeichnet, daß zumindest zwei benachbarte Streifen (103a, 103b; 103b, 103c) des Einbauelements (100) im wesentlichen die gleiche Halbwellen- oder Wellenform aufweisen.

19. Einbauelement nach einem der Ansprüche 1-17, dadurch gekennzeichnet, daß mindestens zwei benachbarte Streifen des Einbauelements (100) eine unterschiedliche Halbwellen- oder Wellenform aufweisen.

20. Einbauelement nach einem der vorangehenden Ansprüche, dadurch gekennzeichnet, daß zumindest zwei benachbarte Streifen (103a, 103b; 103b, 103c) im wesentlichen die gleiche Halbwellen- oder Wellenamplitude aufweisen.

21. Einbauelement nach einem der Ansprüche 1-19, dadurch gekennzeichnet, daß zumindest zwei benachbarte Streifen des Einbauelements (100) eine unterschiedliche Amplitude ihrer Halbwellen oder Wellen aufweisen.

22. Einbauelement nach einem der vorangehenden Ansprüche, dadurch gekennzeichnet, daß das Einbauelement (100) eine wellenförmige Struktur aufweist.

23. Einbauelement nach einem der vorangehenden Ansprüche, dadurch gekennzeichnet, daß das Einbauelement (100) aus Metall, insbesondere Metallblech, Keramik oder Kunststoff ausgebildet ist.

24. Packung für eine Stoff- oder Wärmeaustauschkolonne, gekennzeichnet durch ein Einbauelement nach einem der Ansprüche 1-23.

## Claims

1. A packing element, in particular for mass transfer and/or heat transfer columns or towers, through which a gas and/or a liquid are flowing, said packing element (100) comprising a plurality of exchange surfaces (104), said exchange surfaces (104) being generally formed by the surfaces of half-wave-shaped or wave-shaped strips (103, 103a-103f), and said packing element (100) comprising at least a first group of strips (102a), which has at least a half-wave-shaped or a wave-shaped strip (103a, 103b) with a first periodic length I₁, characterized in that the packing element (100) comprises at least a second group of strips (102b) immediately adjoining the first group of strips (102a), which has at least a half-wave-shaped or a wave-shaped strip (103c, 103d) with a second periodic length I₂, that the periodic length I₁ of the strips (103c, 103d) of the first group of strips (102a) and the periodic length I₂ of the second group of strips (102b) are different, that the wave-shaped or the half-wave-shaped strips (103a-103d) extend along an imagined axial plane of the packing element (100), and that the periodic length I₁ of a strip (103b) of the first group of strips (102a), said strip (103b) adjoining the second group of strips (102b), and the periodic length I₂ of a strip (103c) of the second group of strips (102b), said strip (103c) adjoining the first group of strips (102a), are matched to each other in such a way that the two adjoining strips (103b, 103c) are in contact with each other at at least one point, so that a liquid transfer between these two strips (103b, 103c) can occur.

2. The packing element according to claim 1, characterized in that the packing element (100) comprises at least a third group of strips (102c), which has at least a half-wave-shaped or a wave-shaped strip (103e, 103f) with a third periodic length I₃, that the periodic length I₃ of a strip (103e) of the third group of strips (102c), said strip (103e) adjoining the second group of strips (102b), and the periodic length I₂ of a strip (103d) of the second group of strips (102b), said strip (103d) adjoining the third group of strips (102c), are matched to each other in a way that the two adjoining strips (103d, 103e) are in contact with each other at at least one point.

3. The packing element according to claim 1 or 2, characterized in that in at least one group of strips (102a, 102b, 102c) of the packing element (100) all the strips (103a, 103b; 103c, 103d; 103e, 103f) in general have the same periodic length.

4. The packing element according to one of the claims 1 - 3, characterized in that the periodic length I₁ of at least one strip (103a, 103b) of the first group of strips (102a) is in general equal to the periodic length I₂ of a strip (103c, 103d) of the second group of strips (102b).

5. The packing element according to one of the preceding claims, characterized in that the periodic length I₂ of the strips (103c, 103d) of the second group of strips (102b) is smaller than the periodic length I₁ of the strips (103a, 103b) of the first group of strips (102a), or is equal to this period length I₁.

6. The packing element according to claim 5, characterized in that the periodic length I₁ of the strips (103a, 103b) of the first group of strips (102a) is in general a multiple, in particular an even-numbered multiple, of the periodic length I₂ of the strips (103c, 103d) of the second group of strips (102b).

7. The packing element according to one of the preceding claims, characterized in that two adjoining strips (103a-103f) of the packing element (100) are mechanically connected at their point of contact.

8. The packing element according to claim 7, characterized in that at least two adjoining strips (103a-103f) of the groups of strips (102; 102a-102c) of the packing element (100) form at least one continuous connection (105) for the liquid to be distributed.

9. The packing element according to claim 8, characterized in that at least one of the continuous connections (105) is widened by a crosspiece element.

10. The packing element according to claim 9, characterized in that at least one of the continuous connections (105) extends from a first outside (101a) to a second outside (101b) of the packing element (100), said second outside (101b) being arranged opposite to the first outside (101a).

11. The packing element according to one of the preceding claims, characterized in that at least one outside (101a, 101b) of the packing element (100) is formed as a rim element (106) connecting at least one part of the strips (103a, 103b; 103c, 103d; 103e, 103f) of a group of strips (102a; 102b; 102c).

12. The packing element according to one of the preceding claims, characterized in that at least two half-waves (103a', 103a", 103b', 103b") of two strips (103a, 103b; 103c, 103d; 103e, 103f) of at least one group of strips (102a; 102b; 102c) of the packing element (100) are arranged in opposite phase to each other.

13. The packing element according to one of the preceding claims, characterized in that at least two adjoining strips (103b, 103c; 103d, 103e) of two adjoining groups of strips (102a, 102b; 102b, 102c) are arranged in opposite phase to each other.

14. The packing element according to one of the claims 12 or 13, characterized in that at least one half-wave (103a'-103f', 103a"-103f") of a strip (103a-103f) is arranged in opposite phase to a half-wave (103a"-103f"; 103a'-103f') of the strip (103a-103f) adjoining said strip (103a-103f).

15. The packing element according to one of the claims 12 - 14, characterized in that an upper or a lower half-wave (103a'-103f or 103a"-103f") of a strip (103a-103f) is arranged in opposite phase to the lower or the upper half-wave (103a"-103f" or 103a'- 103f') of the adjoining strip (103a-103f).

16. The packing element according to one of the preceding claims, characterized in that at least one group of strips (102; 102a-102c) of the packing element (100) is arranged tiltedly to one of the outsides (101a, 101b) of the packing element (100).

17. The packing element according to claim 16, characterized in that said tilt is approximately 45°.

18. The packing element according to one of the preceding claims, characterized in that at least two adjoining strips (103a, 103b; 103b, 103c) of the packing element (100) generally have the same half-wave shape or wave shape.

19. The packing element according to one of the claims 1 - 17, characterized in that at least two adjoining strips of the packing element (100) have a different half-wave shape or wave shape.

20. The packing element according to one of the preceding claims, characterized in that at least two adjoining strips (103a, 103b; 103b, 103c) generally have the same half-wave amplitude or wave amplitude.

21. The packing element according to one of the claims 1 - 19, characterized in that at least two adjoining strips of the packing element (100) have a different amplitude of their half-waves or waves.

22. The packing element according to one of the preceding claims, characterized in that the packing element (100) has a wave-shaped structure.

23. The packing element according to one of the preceding claims, characterized in that the packing element (100) is made of metal, in particular sheet metal, ceramics or plastic material.

24. A packing for a mass transfer or heat transfer column, characterized by a packing element according to one of the claims 1 -23.

## Revendications

1. Élément de remplissage, destiné en particulier à des colonnes ou des tours d'échange de matière et/ou de chaleur, dans lesquelles circule un gaz et/ou un liquide, l'élément de remplissage (100) étant muni d'une pluralité de surfaces d'échange (104), qui sont formées sensiblement par des surfaces de bandes (103, 103a-103f) semi-ondulées ou ondulées, et l'élément de remplissage (100) comportant au moins un premier groupe de bandes (102a), qui contient au moins une bande semi-ondulée ou ondulée (103a, 103b) avec une première longueur de période I₁, caractérisé en ce que l'élément de remplissage (100) comprend au moins un deuxième groupe de bandes (102b), qui est directement attenant audit premier groupe de bandes et qui contient au moins une bande (103c, 103d) semi-ondulée ou ondulée avec une deuxième longueur de période I₂, en ce que la longueur de période I₁ des bandes (103a, 103b) du premier groupe de bandes (102a) et la longueur de période I₂ du deuxième groupe de bandes (102b) sont différentes, en ce que les bandes (103a-103d) ondulées ou semi-ondulées s'étendent le long d'un plan axial imaginaire de l'élément de remplissage (100) et en ce que la longueur de période I₁ d'une bande (103b), contiguë au deuxième groupe de bandes (102b), dans le premier groupe de bandes (102a) et la longueur de période I₂ d'une bande (103c), contiguë à celui-ci (102a), dans le deuxième groupe de bandes (102b) sont définies l'une par rapport à l'autre de telle sorte que les deux bandes (103b, 103c) contiguës se touchent au moins dans une zone, de telle sorte que l'échange de liquide peut se réaliser entre les deux bandes (103b, 103c).

2. Élément de remplissage selon la revendication 1, caractérisé en ce que l'élément de remplissage (100) comprend au moins un troisième groupe de bandes (102c), qui contient au moins une bande semi-ondulée ou ondulée (103e, 103f) avec une troisième longueur de période l₃, en ce que la longueur de période I₃ d'une bande (103e), contiguë au deuxième groupe de bandes (102b), dans le troisième groupe de bandes (102c) et la longueur de période I₂ d'une bande (103d), contiguë à celui-ci (102c), dans le deuxième groupe de bandes (102b) sont définies l'une par rapport à l'autre de telle sorte que les deux bandes (103d, 103e) contiguës se touchent au moins dans une zone.

3. Élément de remplissage selon la revendication 1 ou 2, caractérisé en ce que, dans au moins un groupe de bandes (102a, 102b, 102c) de l'élément de remplissage (100), toutes les bandes (103, 103b ; 103c, 103d ; 103e, 103f) présentent sensiblement la même longueur de période.

4. Élément de remplissage selon l'une quelconque des revendications 1 à 3, caractérisé en ce que la longueur de période I₁ d'au moins une bande (103a, 103b) du premier groupe de bandes (102a) est sensiblement égale à la longueur de période I₂ d'une bande (103c, 103d) du deuxième groupe de bandes (102b).

5. Élément de remplissage selon l'une quelconque des revendications précédentes, caractérisé en ce que la longueur de période I₂ des bandes (103c, 103d) du deuxième groupe de bandes (102b) est inférieure à la longueur de période I₁ des bandes (103a, 103b) du premier groupe de bandes (102a) ou égale à cette longueur de période I₁.

6. Élément de remplissage selon la revendication 5, caractérisé en ce que la longueur de période I₁ des bandes (103a, 103b) du premier groupe de bandes (102a) est sensiblement un multiple, en particulier un multiple pair, de la longueur de période I₂ des bandes (103c, 103d) du deuxième groupe de bandes (102b).

7. Élément de remplissage selon l'une quelconque des revendications précédentes, caractérisé en ce que deux bandes (103a-103f) contiguës de l'élément de remplissage (100) sont assemblées par voie mécanique dans leur zone de contact.

8. Élément de remplissage selon la revendication 7, caractérisé en ce qu'au moins deux bandes (103a-103f) contiguës des groupes de bandes (102 ; 102a-102c) de l'élément de remplissage (100) forment au moins une liaison continue (105) pour le liquide à répartir.

9. Élément de remplissage selon la revendication 8, caractérisé en ce qu'au moins l'une des liaisons continues (105) est élargie au moyen d'un élément de traverse.

10. Élément de remplissage selon la revendication 9, caractérisé en ce qu'au moins l'une des liaisons continues (105) s'étend d'un premier côté extérieur (lOla) vers un deuxième côté extérieur (lOlb) opposé à celui-ci (101a) de l'élément de remplissage (100) .

11. Élément de remplissage selon l'une quelconque des revendications précédentes, caractérisé en ce qu'au moins un côté extérieur (101a, 101b) de l'élément de remplissage (100) est conçu en forme d'élément de bordure (106) reliant au moins une partie des bandes (103a, 103b ; 103c, 103d ; 103e, 103f) d'un groupe de bandes (102a ; 102b ; 102c).

12. Élément de remplissage selon l'une quelconque des revendications précédentes, caractérisé en ce qu'au moins deux semi-ondulations (103a', 103a", 103b', 103b") de deux bandes (103a, 103b ; 103c, 103d ; 103e, 103f) d'au moins un groupe de bandes (102a ; 102b ; 102c) de l'élément de remplissage (100) sont disposées en opposition de phase l'une par rapport à l'autre.

13. Élément de remplissage selon l'une quelconque des revendications précédentes, caractérisé en ce qu'au moins deux bandes juxtaposées (103b, 103c ; 103d, 103e) de deux groupes de bandes (102a , 102b ;102b, 102c) contigus sont disposées en opposition de phase.

14. Élément de remplissage selon la revendication 12 ou 13, caractérisé en ce qu'au moins une semi-ondulation (103a'-103f' ; 103a"-103f") d'une bande (103a-103f) est disposée en opposition de phase par rapport à une semi-ondulation (103a"-103f" ; 103a'-103f') de la bande (103a-103f) contiguë à celle-ci.

15. Élément de remplissage selon l'une quelconque des revendications 12 à 14, caractérisé en ce qu'une semi-ondulation supérieure ou inférieure (103a'-103f' ou 103a"-103f") d'une bande (103a-103f) est disposée en opposition de phase par rapport à une semi-ondulation inférieure ou supérieure (103a"-103f" ou 103a'-103f') de la bande (103a-103f) contiguë.

16. Élément de remplissage selon l'une quelconque des revendications précédentes, caractérisé en ce qu'au moins un groupe de bandes (102 ; 102a-102c) de l'élément de remplissage (100) est incliné en oblique par rapport à l'un des côtés extérieurs (101a, lOlb) de l'élément de remplissage (100).

17. Élément de remplissage selon la revendication 16, caractérisé en ce que cette inclinaison est égale à 45° environ.

18. Élément de remplissage selon l'une quelconque des revendications précédentes, caractérisé en ce qu'au moins deux bandes (103a, 103b ; 103b, 103c) contiguës de l'élément de remplissage (100) présentent sensiblement la même forme de semi-ondulation ou d'ondulation.

19. Élément de remplissage selon l'une quelconque des revendications 1 à 17, caractérisé en ce qu'au moins deux bandes contiguës de l'élément de remplissage (100) présentent une semi-ondulation ou une ondulation de forme différente.

20. Élément de remplissage selon l'une quelconque des revendications précédentes, caractérisé en ce qu'au moins deux bandes (103a, 103b ; 103c, 103d) contiguës comportent sensiblement la même amplitude de semi-ondulation ou la même amplitude d'ondulation.

21. Élément de remplissage selon l'une quelconque des revendications 1 à 19, caractérisé en ce qu'au moins deux bandes contiguës de l'élément de remplissage (100) comportent une amplitude différente pour leur semi-ondulation ou ondulation.

22. Élément de remplissage selon l'une quelconque des revendications précédentes, caractérisé en ce que l'élément de remplissage (100) présente une structure ondulée.

23. Élément de remplissage selon l'une quelconque des revendications précédentes, caractérisé en ce que l'élément de remplissage (100) est réalisé en métal, en particulier une plaque métallique, en céramique ou en matière plastique.

24. Garnissage destiné à une colonne d'échange de matière ou de chaleur, caractérisé par un élément de remplissage selon l'une quelconque des revendications 1 à 23.
